# DEMANDE DE BREVET EUROPEEN

(11) **EP 1 110 664 A1**
(43) Date de publication de la demande: **27.06.2001**
(21) Numéro de dépôt: 00403411.2
(22) Date de dépôt: 06.12.2000
(51) Int. Cl.: B23P 19/04, B23P 21/00

(54) **Poste d'une ligne d'assemblage de blocs-cylindres de moteur thermique**

(30) Priorité: 15.12.1999 FR 9915808
(71) Demandeur: RENAULT AUTOMATION COMAU, 92365 Meudon la Forêt, Cedex (FR)
(72) Inventeur: Blondeau, Jean-Marc, 91330 Yerres (FR)
(74) Mandataire: Robert, Jean-Pierre

(57) **Abrégé**

Poste d'assemblage ou de contrôle appartenant à une ligne d'assemblage mécanique des éléments constitutifs d'un bloc-cylindres (3) de moteur thermique limité par deux faces planes, l'une (3b) supérieure de pose de la culasse et l'autre inférieure (3a) de pose du carter d'huile, comportant une structure stationnaire (6) dans le référentiel de laquelle les éléments (3,4) à assembler ou à contrôler sont placés et des moyens motorisés mobiles par rapport à cette structure stationnaire (6) pour engendrer un mouvement d'au moins un des éléments (3) dans le référentiel de la structure stationnaire (6), dans lequel la structure stationnaire (6) est dépourvue desdits moyens motorisés, ceux-ci étant formés ou portés par au moins un robot (1) extérieur à la structure stationnaire (6).

## Description

La présente invention concerne au moins l'un des postes d'une ligne d'assemblage des éléments constitutifs d'un carter ou bloc-cylindres de moteur de véhicule.

L'assemblage d'un bloc-cylindres de moteur de véhicule automobile consiste à équiper un carter cylindres ou bas moteurde son vilebrequin et des ensembles bielle-axe-piston. Plus précisément, cette ligne d'assemblage est formée d'une succession de postes pour réaliser les opérations suivantes :
- enlèvement des chapeaux de palier de vilebrequin qui parviennent à la ligne vissés au carter,
- équipement des demi-paliers du carter par des demi-coussinets,
- équipement des chapeaux par des demi-coussinets,
- mise en place des gicleurs d'huile dans le carter,
- mise en place du vilebrequin,
- mise en place des butées latérales entre le vilebrequin et le carter,
- fermeture des demi-paliers du carter par les chapeaux équipés de coussinets,
- mesure de la distance séparant chaque maneton de vilebrequin de la surface de pose de la culasse sur le carter (pour les moteurs diesel),
- mise en place de chaque chapeau de bielle pour refermer le palier de bielle autour du maneton de vilebrequin correspondant,
- mise en place de chacun des ensembles bielle-axe-piston (préalablement assemblés) dans chaque cylindre,
- équipement du carter avec des tubulures et embouts extérieurs,
- serrage simultané du carter d'huile et du volant.

Le carter ou bloc-cylindres est ensuite dirigé à l'entrée d'une autre ligne d'assemblage où il recevra la culasse également pré-équipée des éléments qu'elle porte.

L'ensemble bielle-axe-piston est préparé sur une ligne secondaire comprenant des postes destinés à séparer chaque bielle de son chapeau de bielle, à segmenter chaque piston à assembler piston et bielle au moyen d'un axe, et à équiper chaque demi-palier de bielle et chaque chapeau de bielle d'un demi-coussinet.

Dans l'organisation habituelle d'une telle ligne, chaque poste comporte des moyens d'accueil et de positionnement relatif des différents composants à assembler (ou à contrôler) et des moyens de manoeuvre d'outils d'assemblage (ou de contrôle) dédiés au poste et qui appartiennent au référentiel de ce dernier à partir duquel leur programmation est réalisée. Cette architecture est relativement contraignante et peu flexible. En effet les possibilités de réglage et d'ajustement des outillages sont restreintes dans un poste ce qui limite le nombre de modèles différents qui peuvent être traités dans ce poste. Par ailleurs, il existe une distinction nette entre les moyens de desserte du poste et les moyens d'assemblage, ces derniers n'étant actionnés qu'après le retrait des premiers ce qui constitue une contrainte au plan du temps de cycle.

La recherche du gain de temps est un souci constant dans ce type d'installation. Par ailleurs, il est également recherché une flexibilité maximale d'une telle ligne d'assemblage pour pouvoir traiter des moteurs de différents types d'où la mise en oeuvre, autant que faire se peut, d'un outillage unique capable de s'adapter aux différentes dimensions des pièces à assembler. Or la robotique autorise une maîtrise de plus en plus fine des trajectoires des pièces manipulées par des robots, trajectoires dont les coordonnées donc peuvent être connues en tout point et en particulier aux extrémités de celles-ci avec une précision qui est de l'ordre de la précision exigée pour les opérations d'assemblage ou du moins pour certaines d'entre elles.

Par la présente invention on entend améliorer les performances d'une ligne d'assemblage mécanique d'un ensemble du genre bloc ou carter cylindres d'un moteur thermique par une répartition des fonctions dans chaque poste d'assemblage automatisé différente de celle connue afin de profiter des progrès techniques réalisés au niveau des robots.

A cet effet, l'invention a pour objet un poste d'assemblage ou de contrôle appartenant à une ligne d'assemblage mécanique des éléments constitutifs d'un bloc-cylindre de moteur thermique limité par deux faces planes, l'une supérieure de pose de la culasse et l'autre inférieure de pose du carter d'huile, comportant une structure stationnaire dans le référentiel de laquelle les éléments à assembler ou à contrôler sont placés et des moyens motorisés mobiles par rapport à cette structure stationnaire pour engendrer un mouvement d'au moins un des éléments dans le référentiel de la structure stationnaire. Selon l'invention, la structure stationnaire est dépourvue desdits moyens motorisés, ceux-ci étant formés ou portés par au moins un robot extérieur à la structure stationnaire.

Pour comprendre l'intérêt d'une telle architecture, on prendra l'exemple d'un poste dans lequel un bloc-cylindre, déjà équipé de son vilebrequin, doit subir la mesure de la distance qui sépare chaque maneton de la face du bloc destinée à recevoir la culasse. Il est en effet important de connaître cette valeur, notamment pour les moteurs diesel, pour appairer les manetons et les ensembles bielle piston afin que le volume de chaque chambre de combustion d'un même moteur, au point mort haut, soit identique.

Dans le cas d'un poste connu, le bloc-cylindre est placé dans le poste de contrôle par l'intermédiaire d'un outillage de mise en référence dans ce poste et son vilebrequin est accouplé à un moteur de son entraînement en rotation. Un outillage de contrôle, solidaire du poste, est amené au droit de chacun des cylindres pour procéder au relevé de cette dimension, afin d'informer l'unité de contrôle du cycle de montage pour préparer l'appairage susdit. Puis le bloc est découplé du moteur d'entraînement du vilebrequin et est extrait du poste.

Pendant le cycle de contrôle les moyens de manutention sont en attente. Dans l'architecture d'un tel poste conforme à l'invention, la structure stationnaire du poste de contrôle ne comporte qu'un capteur que l'on coiffe par le bloc-cylindres grâce au robot de manutention qui est programmé pour présenter successivement chacun des manetons au droit du capteur. Ce robot porte avec lui, associé aux moyens de préhension du bloc, un moteur d'entraînement du vilebrequin. La trajectoire du robot résulte d'une programmation qui est adaptée à chacun des types de moteur à contrôler, grâce à la reconnaissance de ce type préalablement à sa prise en charge. Le changement de type de moteur ne requiert aucune intervention au niveau de la structure stationnaire du poste qui porte le capteur, réduite ainsi à sa plus simple expression, n'ayant aucun moyen motorisé. En outre, les moyens de manutention ont un coefficient d'occupation beaucoup plus important.

Cette architecture trouve une application dans plusieurs des postes nécessaires à l'assemblage d'un bloc-cylindres.

C'est ainsi, par exemple, pour le poste de mise en place des demi coussinets de paliers de vilebrequin dans le bloc-cylindres, que la structure stationnaire comporte une table de posage d'au moins un demi coussinet sur un support de maintien de ce dernier avec sa concavité tournée vers le bas et que le robot associé est équipé d'un moyen de préhension du bloc-cylindres par ses deux extrémités axiales pour le présenter sa face inférieure tournée vers la table de posage et l'approcher au contact du demi coussinet jusqu'à la réalisation d'un encliquetage de ce dernier dans le palier correspondant de bloc.

On comprend que, dans ce cas, l'assemblage ne demandant qu'un mouvement des pièces à joindre, il est avantage de profiter de la motorisation propre du robot pour assurer cette simple fonction au lieu de la faire réaliser par un outillage motorisé dédié au poste en plus du robot ou des moyens de manutention, uniquement employés à la desserte du poste.

L'invention trouve aussi une réalisation intéressante dans un autre poste de contrôle qui est celui du contrôle de la présence des demi coussinets dans les demi paliers de vilebrequin du bloc-cylindres. Dans ce cas, la structure stationnaire comporte au moins un capteur photoélectrique comportant une cellule émettrice et une cellule réceptrice distantes l'une de l'autre d'une valeur supérieure à la largeur d'un demi coussinet, chaque cellule étant portée par un bras s'étendant à partir d'une semelle d'appui de la face inférieure du bloc-cylindres, le robot associé étant équipé d'un moyen de préhension du bloc-cylindres par ses extrémités axiales pour le présenter, sa face inférieure tournée vers la semelle du support du capteur, en appui contre celle-ci.

On notera également que la structure stationnaire peut comporter des moyens d'appui pour les moyens motorisés équipant le robot lorsque le mouvement qu'ils engendrent crée des efforts de réaction supérieurs à ce que peut encaisser sans déformation le robot. C'est notamment le cas dans un poste d'implantation de canules, tubes, embouts, ...(gicleurs d'huile de refroidissement du piston, guide tubulaire de la jauge du niveau d'huile dans le carter, ...), la structure stationnaire comportant un mécanisme de bridage du bloc-cylindres et le robot associé comportant un organe de préhension de chaque canule et une presse d'emmanchement de celle-ci dans le bloc qui prend appui sur la structure stationnaire à l'opposé de la canule.

D'autres caractéristiques et avantages de l'invention ressortiront à la lecture de la description qui suit d'exemples de réalisation particuliers non limitatifs de l'invention.

Il sera fait référence aux dessins annexés parmi lesquels :
- la figure 1 est un schéma d'un poste de pose des demi coussinets de palier de vilebrequin,
- la figure 2 est un schéma d'un poste de contrôle de la présence des demi coussinets,
- la figure 3 illustre par un schéma d'un poste de pose des gicleurs d'huile à l'intérieur du bloc-cylindres,
- la figure 4 est un schéma d'un poste de mesure de la distance séparant chaque maneton de vilebrequin de la face culasse du bloc-cylindres,
- la figure 5 est le schéma d'un poste d'implantation des embouts de tubulure dans la surface externe du bloc-cylindres,

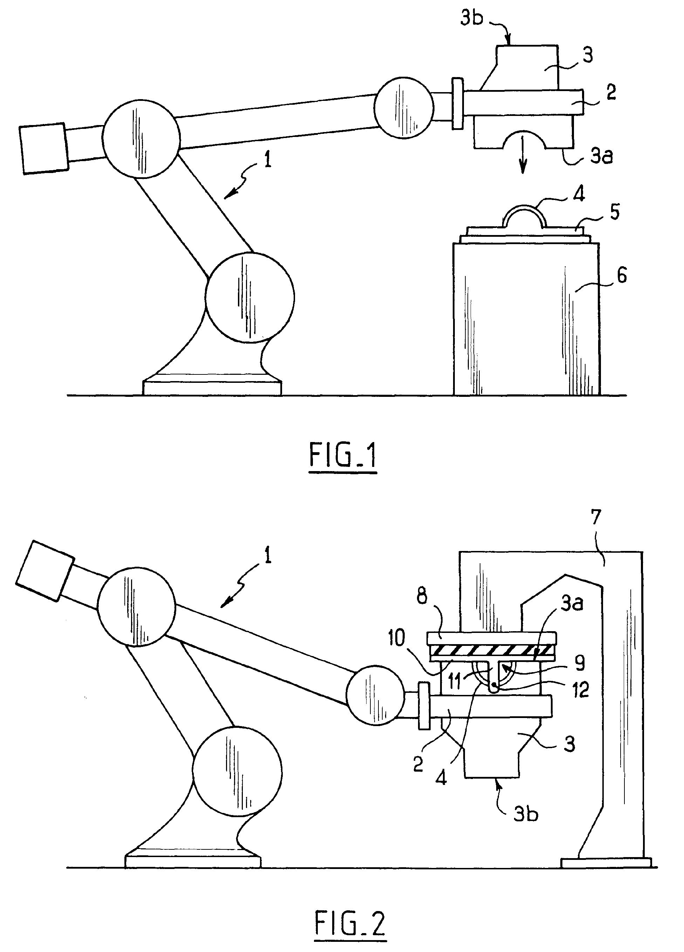

A la figure 1 on a représenté un robot 1 pourvu d'une pince 2 de préhension d'un bloc-cylindres 3 d'un moteur à combustion interne, limité par une face plane inférieure 3a de pose du carter d'huile et face supérieure 3b de pose de la culasse. Ce robot appartient à un poste de mise en place des demi coussinets de paliers de vilebrequin. Ces demi coussinets se présentent sous forme de demi bagues dont les dimensions sont telles qu'elles peuvent s'encliqueter dans les portées prévues dans le bloc. L'assemblage consiste donc à rapprocher chaque demi bague de chaque portée. Pour un moteur à quatre cylindres il faut mettre en place cinq coussinets. Les demi bagues 4 correspondantes sont disposées sur un support commun 5, leur concavité tournée vers le bas, au moyen de contre formes que comporte ce support qui indexent les coussinets les uns par rapport aux autres.

Le support 5 est posé sur une table de posage 6 qui constitue la structure stationnaire du poste. Des moyens connus en eux-mêmes assurent le maintien indexé du support dans une position repérée et connue du robot 1 dans le référentiel de la structure stationnaire du poste

Le robot 1 est dans le cas d'espèce un robot de manutention du bloc 3 entre un poste amont de la ligne d'assemblage, non représenté, où les chapeaux de palier ont été retirés et un poste aval où le bloc sera déposé pour, par exemple, recevoir le vilebrequin.

C'est ainsi que le robot 1 prend en charge le bloc au moyen de sa pince de préhension 2 par ses extrémités axiales, au poste amont et retourne le bloc pendant sa trajectoire pour tourner sa face inférieure 3a en regard de la table de posage 6.

Par programmation, le robot 1 place le bloc exactement à l'aplomb du support 5. Cette programmation est conçue pour prendre en compte le type de moteur concerné qui lui a été communiqué par tout moyen de reconnaissance au moment de l'entrée dans le cycle du bloc. Il suffit ensuite au robot de descendre le bloc sur le support 5 jusqu'à une altitude déterminée pour provoquer l'encliquetage simultané des cinq demi coussinets dans les cinq demi paliers.

Une variante de réalisation prévoit d'encliqueter les coussinets les uns après les autres dans les demi paliers, ce qui augmente la flexibilité du poste.

Le même robot 1, sans avoir lâché le bloc 3 poursuit sa trajectoire jusqu'à un poste intermédiaire de contrôle de la présence des demi coussinets dans les logement du bloc 3. Ce poste est représenté à la figure 2. Entre les deux postes, le robot a effectué un nouveau retournement du bloc pour présenter sa face inférieure 3a tournée vers le haut. La structure stationnaire de ce poste est formée par une potence 7 à laquelle est fixée une platine 8 de support d'un capteur photoélectrique 9. Ce capteur est constitué par une semelle 10 et au moins deux bras 11, dirigés vers le bas et distants l'un de l'autre dans une direction parallèle à l'axe du vilebrequin, d'une valeur supérieure à la largeur des demi paliers. L'un des bras porte une cellule émettrice 12 d'un rayon lumineux et l'autre, en regard de la première, une cellule réceptrice de ce rayon. La distance des cellules à la semelle 10 est déterminée de manière que lorsque le bloc 3 est en appui sur cette semelle par sa face 3a, le rayon est interrompu par la présence d'un coussinet et conservé en l'absence de ce dernier.

L'outillage de contrôle ainsi brièvement décrit, peut comporter une seule paire de cellules, le robot présentant tour à tour chaque demi palier entre elles. Une variante de réalisation peut prévoir un outillage avec six bras porteurs de cinq couples de cellules pour assurer un contrôle simultané de la présence de toutes les demi bagues. On mentionnera le fait que l'épaisseur de ces demi coussinets est de l'ordre du millimètre. Afin d'être certain d'un appui correct de la surface 3a du bloc sur la semelle 10, on a prévu un attelage souple entre la semelle 10 et la platine 8 de la potence 7, par exemple au moyen d'une plaque 13 de caoutchouc ou d'un ensemble de ressorts de compression interposé entre la platine et la semelle.

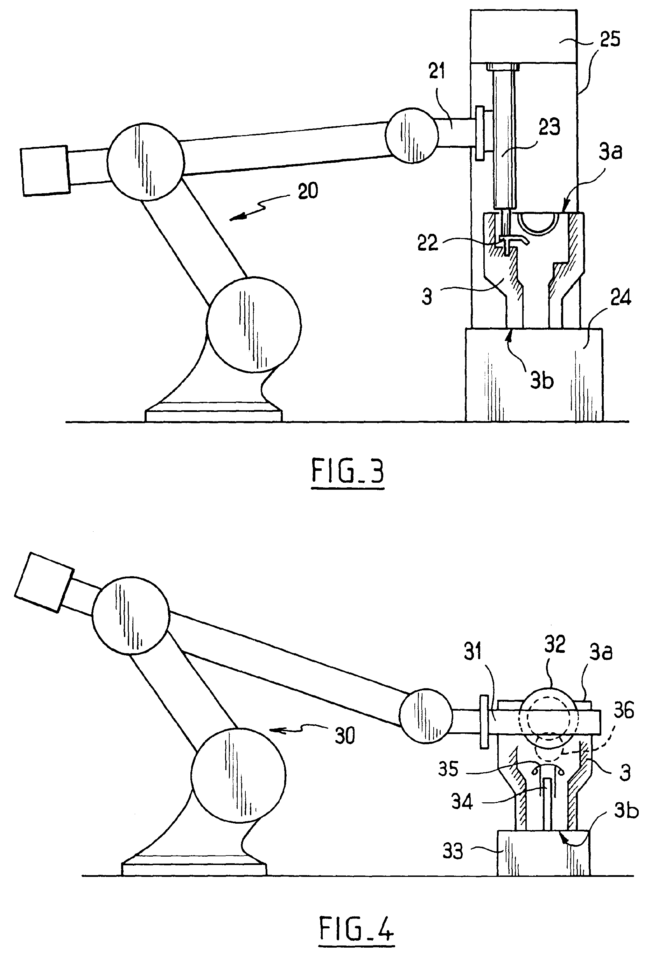

Le poste illustré par la figure 3 est un poste dans lequel le bloc 3, déjà pourvu de ses demi coussinets, est équipé d'une part, de gicleurs d'huile de refroidissement des pistons et, d'autre part, du vilebrequin. Le robot 20 qui oeuvre dans ce poste, possède une main 21 pourvue de plusieurs outils notamment un outil de préhension des gicleurs 22, associé à une presse 23 d'enfoncement de ces gicleurs dans le corps du bloc et un outil de préhension du vilebrequin (non représenté). Le robot 1 des figures précédentes a déposé le bloc 3 sur la structure stationnaire du poste de la figure 3 qui comprend une table de posage 24 et un bâti supérieur 25 sensiblement à l'aplomb de la table 24. Les gicleurs d'une part et le vilebrequin d'autre part sont en attente sur des posages non représentés que le robot 20 peut atteindre. Ce dernier saisit tout d'abord un premier gicleur 22 pour le présenter en regard de l'orifice du bloc qui doit le recevoir. Au moyen de la presse 23, qui est un vérin hydraulique ou électrique dont la course est contrôlée, le robot procède à l'enfoncement de ce gicleur. L'effort à développer à cette occasion est plus important que celui capable d'être encaissé sans déformation par le robot. La presse est conçue de telle manière qu'elle agit entre la bloc et le bâti supérieur 25 qui lui sert d'appui solide pour encaisser sans déformation la réaction de l'effort d'enfoncement. Il est alors possible de maîtriser le degré d'enfoncement désiré. Dans la même opération, le robot 20 réalise à la projection d'une quantité d'huile de graissage dans le ou les demi paliers adjacents au moyen de buses dont l'outil d'enfoncement est équipé.

Après avoir mis en place les gicleurs un par un, le robot saisit le vilebrequin en attente et le dépose dans le demi paliers puis réalise la projection d'huile et de graisse sur le vilebrequin.

Dans ce poste, conformément à l'invention, la structure stationnaire est dépourvue de tout moyen motorisé, ce qui la rend de conception simple et apte à accueillir des bloc-cylindres de types différents avec un minimum de moyens d'adaptation tenant essentiellement aux moyens d'indexation du bloc sur la table de posage et, éventuellement aux moyens de bridage de celui-ci.

La figure 4 illustre l'application des moyens généraux de l'invention à un poste de mesure de la distance séparant les manetons du vilebrequin à la face supérieure (face culasse) 3b du bloc 3. Ce poste comprend un robot 30 dont la main 31 est formée d'une pince qui maintient le bloc 3 au niveau des extrémités de son vilebrequin. De manière connue, le vilebrequin est équipé d'une platine extérieure au bloc 3 qui sert d'organe de fixation du volant d'inertie. L'une des branches de la pince est équipée d'un moteur 32 dont l'arbre de sortie se termine, à l'intérieur de la branche par un patin relativement déformable, capable de coopérer par friction avec la platine du vilebrequin pour l'entraîner en rotation tant que le bloc 3 est maintenu par la pince.

Le poste comporte une structure stationnaire qui est formée par une table 33 du support d'un capteur 34 vertical. Ce capteur, possède une tête supérieure 35 dont la distance par rapport à la surface supérieure de la table 34 est connue en permanence, cette tête pouvant être déplacée en altitude. La mesure réalisée dans ce poste consiste, pour le robot 30, à coiffer le capteur 34 par le bloc 3 en faisant successivement pénétrer le capteur dans chacun des cylindres, alors que le vilebrequin est entraîné en rotation. Lorsque la face culasse du bloc est en appui sur la face supérieure de la table, le maneton contrôlé 36 provoque au moins un enfoncement de la tête du capteur du fait de la rotation du vilebrequin. L'altitude minimale de la tête par rapport à la surface supérieure de la table, à ce moment, correspond à la dimension à mesurer. Le robot 30 répète cette opération pour chacun des manetons à mesurer.

On pourrait prévoir une variante de réalisation de ce poste consistant, comme dans le poste de la figure 2, à approcher le bloc d'une platine fixe supérieure de laquelle le capteur s'étendrait vers le bas. Dans le cas de ce poste, le changement de type de bloc à mesurer ne demande aucune adaptation de la structure stationnaire du poste, la prise en compte de ce changement se résumant uniquement à une modification de la programmation du robot 30.

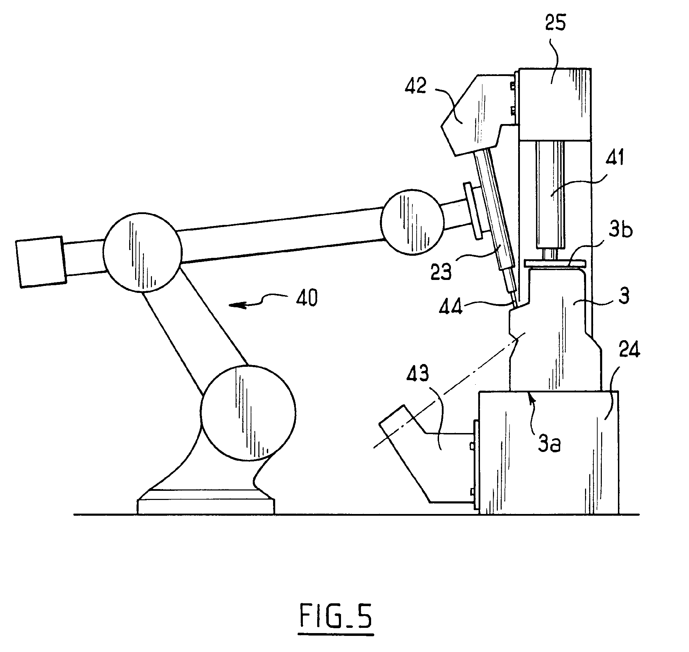

Le poste représenté schématiquement à la figure 5 est à rapprocher de celui illustré par la figure 3. Il s'agit ici d'un poste dans lequel on équipe le bloc 3 de canules, embouts ou tubulures qu'il convient d'implanter au travers de la surface extérieure de ce bloc.

Comme précédemment décrit, le robot 40 possède un outillage embarqué permettant de saisir dans un magasin non représenté les différents organes à implanter dans le corps du bloc 3 (par exemple un guide tubulaire 44 d'une jauge de niveau d'huile dans le carter), de les présenter et de les enfoncer à force dans le bloc. La structure stationnaire du poste est, comme à la figure 3, formée d'une table 24 et d'un bâti supérieur 25 qui la surmonte. Le bloc 3 est posé sur la table et y est assujetti par un outil de bridage 41 de manière à présenter sa face culasse 3b tournée vers le haut. L'incidence de la direction d'enfoncement est telle que pour offrir un appui de réaction à la presse 23, le bâti et la table sont équipés de goussets 42 en partie supérieure et 43 en partie inférieure. On notera que l'organe de bridage 41 s'oppose solidement à une incidence d'enfoncement dirigée vers le haut. L'adaptation de la structure stationnaire du poste aux différents types de moteur s'opère simplement par la mise en place de goussets adaptés à chaque type, l'organe de bridage pouvant être commun à tous les types.

On indiquera que la structure stationnaire de certains des postes conformes à l'invention peut appartenir à un dispositif de transfert de la ligne d'assemblage en forme par exemple de carrousel ou de plateau tournant.

## Revendications

1. Poste d'assemblage ou de contrôle appartenant à une ligne d'assemblage mécanique des éléments constitutifs d'un bloc-cylindres (3) de moteur thermique limité par deux faces planes, l'une (3b) supérieure de pose de la culasse et l'autre inférieure (3a) de pose du carter d'huile, comportant une structure stationnaire dans le référentiel de laquelle les éléments à assembler ou à contrôler sont placés et des moyens motorisés mobiles par rapport à cette structure stationnaire pour engendrer un mouvement d'au moins un des éléments dans le référentiel de la structure stationnaire, caractérisé en ce que la structure stationnaire est dépourvue desdits moyens motorisés, ceux-ci étant formés ou portés par au moins un robot extérieur à la structure stationnaire.

2. Poste selon la revendication 1, caractérisé en ce que le robot (1) susdit est un robot de manutention d'au moins l'un (3) des éléments susdits.

3. Poste selon la revendication 1, caractérisé en ce que la structure stationnaire comporte des moyens d'appui (25,42,43) pour les moyens motorisés (23) du robot lorsque le mouvement qu'ils engendrent crée des efforts de réaction supérieurs à ce que peut encaisser sans déformation le robot.

4. Poste de mise en place des demi coussinets de paliers de vilebrequin dans le bloc-cylindres selon la revendication 2, caractérisé en ce que la structure stationnaire comporte une table de posage (6) d'au moins un demi coussinet (4) sur un support (5) de maintien de ce dernier avec sa concavité tournée vers le bas et en ce que le robot (1) associé est équipé d'un moyen de préhension du bloc-cylindres (3) par ses deux extrémités axiales pour le présenter sa face inférieure (3a) tournée vers la table de posage et l'approcher au contact du demi coussinet jusqu'à la réalisation d'un encliquetage de ce dernier dans le demi palier correspondant du bloc.

5. Poste de contrôle de la présence des demi coussinets (4) de palier dans le bloc-cylindres (3) selon la revendication 2, caractérisé en ce que la structure stationnaire comporte au moins un capteur photoélectrique (9) comportant une cellule émettrice et une cellule réceptrice distantes l'une de l'autre d'une valeur supérieure à la largeur d'un demi coussinet, chaque cellule étant portée par un bras (11) s'étendant à partir d'une semelle d'appui (10) de la face inférieure (3a) du bloc-cylindres (3), et en ce que le robot (1) associé est équipé d'un moyen de préhension du bloc-cylindres par ses extrémités axiales pour le présenter, sa face inférieure tournée vers la semelle du support du capteur, en appui contre celle-ci.

6. Poste d'implantation de canules ou embouts dans le bloc-cylindres d'un moteur thermique selon la revendication 1, caractérisé en ce que la structure stationnaire comporte un mécanisme (41) de bridage du bloc-cylindres (3) et en ce que le robot associé (20,40) comporte un organe de préhension de chaque canule et une presse (23) d'emmanchement de celle-ci dans le bloc (3) qui prend appui sur la structure stationnaire (24,25,42,43) à l'opposé de la canule.

7. Poste de contrôle de la distance séparant la face supérieure d'un bloc-cylindres de chaque maneton de vilebrequin en position de point mort haut selon la revendication 2, caractérisé en ce que la structure stationnaire (33) comporte un capteur (34) formé par un palpeur rétractable associé à une platine tandis que le robot (30) associé comporte une pince (31) de préhension du bloc-cylindres (3) dont une branche au moins prend appui sur une extrémité axiale du vilebrequin extérieur au bloc-cylindres au moyen d'un patin de friction d'entraînement en rotation du vilebrequin accouplé à un moteur (32).
